Europäisches Patentamt

European Patent Office

Office européen des brevets

(11) Veröffentlichungsnummer : **0 028 341**
**B1**

(12) **EUROPÄISCHE PATENTSCHRIFT**

(45) Veröffentlichungstag der Patentschrift :
01.06.83

(21) Anmeldenummer : 80106349.6

(22) Anmeldetag : 18.10.80

(51) Int. Cl.³ : **C 22 B   7/02**, C 22 B   1/24

(54) Verfahren zur Rückgewinnung von bei der Erzeugung und Bearbeitung von Stahl anfallenden Reststoffen.

(30) Priorität : 24.10.79 DE 2942899

(43) Veröffentlichungstag der Anmeldung :
13.05.81 Patentblatt 81/19

(45) Bekanntmachung des Hinweises auf die Patenterteilung : 01.06.83 Patentblatt 83/22

(84) Benannte Vertragsstaaten :
AT BE FR GB IT LU NL SE

(56) Entgegenhaltungen :
DE A 2 422 619
DE A 2 531 457
DE B 1 058 263
DE B 1 135 501
DE C 718 967
DE C 942 268
FR A 2 245 767
FR A 2 310 413
LU A 41 054
US A 2 173 535
JOURNAL OF METALS, März 1964, F.J.
McMULKIN et al. : « Hot briquetting », Seiten 246-
251

(73) Patentinhaber : **Kaas, Werner**
**Buchenstrasse 173**
**D-4220 Dinslaken (DE)**

**Borggrefe, Hans-Helmut, Dr.**
**Herzogenweg 10**
**D-4156 Willich 1 (DE)**

**Unger, Klaus-Dieter, Dr.**
**Forstwaldstrasse 684**
**D-4150 Krefeld 1 (DE)**

(72) Erfinder : **Kaas, Werner**
**Buchenstrasse 173**
**D-4220 Dinslaken (DE)**
Erfinder : **Borggrefe, Hans-Helmut, Dr.**
**Herzogenweg 10**
**D-4156 Willich 1 (DE)**
Erfinder : **Unger, Klaus-Dieter, Dr.**
**Forstwaldstrasse 684**
**D-4150 Krefeld 1 (DE)**

(74) Vertreter : **Patentanwältsburo Cohausz & Florack**
**Schumannstrasse 97**
**D-4000 Düsseldorf 1 (DE)**

**0 028 341**

Verfahren zur Rückgewinnung von bei der Erzeugung und Bearbeitung von Stahl anfallenden Reststoffen

Die Erfindung bezieht sich auf ein Verfahren zur Rückgewinnung von bei der Erzeugung und Bearbeitung von Stahl in Form von metallhaltigem Staub und Spänen anfallenden Reststoffen, wobei diese Reststoffe unter Zusatz von Bindemittel zu Brikett geformt werden.

Die Rückgewinnung von Reststoffen ist ein seit langem behandeltes Thema, sie gewinnt jedoch in jüngerer Zeit im Zusammenhang mit der Rohstoffverknappung und den Schwierigkeiten geeignete Deponien zu finden steigende Bedeutung. Da die Reststoffe einen hohen Metallanteil, Eisen aber auch teure Legierungselemente wie Chrom und Nickel, haben, ist ihre Wiederverwendung zur Einsparung teurerer Einsatzstoffe interessant. Hinzu kommt, daß das Transportieren und Deponieren der meist feinstaubförmigen Reststoffe einige Probleme hinsichtlich Umweltbelastung bereitet.

Es sind denn auch zahlreiche Vorschläge zur Aufbereitung von Reststoffen mit dem Ziel ihrer Wiederverwendung bei der Stahlerzeugung gemacht worden.

Aus der DE-AS 23 61 742 ist beispielsweise ein Verfahren bekannt, nach welchem aus vier Komponenten, nämlich Schlamm, einem Grobanteil mit einer Korngröße > 100 $\mu$m, z. B. Metallspäne, einem Feinanteil mit einer Korngröße < 100 $\mu$m und einem Bindemittel durch Mischen und Pressen kugelförmige Preßlinge hergestellt werden, wobei die Mischung vor dem Pressen auf eine Temperatur erhitzt werden muß, bei der das Bindemittel flüssig wird. Nachteilig bei diesem bekannten Verfahren ist, daß der Anteil des sehr schwer zu verarbeitenden Feinstanteils mit einer Korngröße unter 100 $\mu$m auf maximal 25 % beschränkt ist, weil Stäube in diesem Korngrößenspektrum den weitaus größeren Teil der anfallenden Abfallprodukte ausmachen. Außerdem ist ein kontinuierlich arbeitender Plattenbandofen erforderlich, um die Mischung zur Verflüssigung des Bindemittels zu erhitzen. Da nach dem bekannten Verfahren Schlamm unbedingter Bestandteil der Mischung ist, ist nicht ohne weiteres erkennbar, auf welche Weise nur trocken anfallende Reststoffe zur Rückgewinnung aufbereitet werden können.

Das gleiche gilt für das aus der DE-AS 25 31 457 bekannte Verfahren, bei dem der Schlammanteil vor dem Zumischen des Bindemittels und dem Staubanteil zunächst bis auf einen Wassergehalt von 2 bis 15 Gew.-% entwässert werden muß. Auch dieses bekannte Verfahren erfordert eine Erhitzung der Briketts auf 350 °C zur Entfernung der Restfeuchte. Dieses Verfahren ist daher verhältnismäßig aufwendig und teuer.

Gemäß DE-AS 24 22 619 werden feinteilige Abfälle, die neben Kohlenstoff wenigstens 5 % Eisen enthalten, mit einem bituminösen Bindemittel vermischt, das Gemisch zu Briketts geformt und die Briketts 30 bis 90 Minuten lang mit einem sauerstoffhaltigen Gas bei 170 bis 320 °C behandelt. Diese thermische Behandlung ist jedoch technisch und kostenmäßig aufwendig. Das Verfahren soll entweder nur auf die bei der Eisen- und Stahlherstellung anfallenden pulver- oder staubförmigen Abfälle, nämlich Hochofengichtstaub, Konverterstaub, Walzzunder, Koksstaub und Flußmittel oder aber auf die Abfälle aus Gießereien und Maschinenwerkstätten, nämlich Dreh- und Bohrspäne angewendet werden. Mischungen von feinen mit groben Kornfraktionen sind bei diesem Verfahren nicht vorgesehen. Sofern Späne eingesetzt werden, so sollen sie gemäß DE-AS 24 22 619 in ihren Abmessungen 6 mm nicht übersteigen, notfalls sollen sie zekleinert werden, was einen zusätzlichen Aufwand bedeutet.

Der Erfindung liegt die Aufgabe zugrunde, ein Verfahren zu schaffen, nach dem es möglich ist, metallhaltigen Staub und Metallspäne als die beiden bei der Erzeugung und Bearbeitung von Stahl mengenmäßig am stärksten anfallenden Reststoffe in möglichst einfacher und preiswerter Weise aufzubereiten. Der Erfindung liegt die Erkenntnis zugrunde, daß der in Filtern abgeschiedene metallhaltige Staub u. a. auch freien Kalk enthält, der bei längerer Lagerung der aus dem Staub gepreßten Briketts infolge Feuchtigkeitsaufnahme den Zerfall der Briketts verursacht. Außerdem wurde festgestellt, daß beim Pressen von Briketts aus metallhaltigem Staub und Metallspänen bestimmte Mischungsverhältnisse eingehalten werden müssen, um die Verpreßbarkeit zu erleichtern.

Zur Lösung der gestellten Aufgabe wird erfindungsgemäß vorgeschlagen, daß die bei der Stahlerzeugung und/oder -behandlung angefallenen, in Filtern abgeschiedenen und gesammelten staubförmigen metallhaltigen Reststoffe im trockenen Zustand zur Hydratisierung des im Staub enthaltenen freien gebrannten Kalks (CaO) mit 3 bis 8 %, vorzugsweise 4 bis 7 % Wasser befeuchtet und gemaukt bzw. mit einer entsprechenden Menge Wasserdampf behandelt und ausreagieren gelassen werden und nach Abschluß der Hydratisierung mit Metallspänen, deren Länge 7 bis 30 mm, vorzugsweise 7 bis 15 mm, beträgt, im Verhältnis 70 : 30 bis 30 : 70 gemischt und der Mischung nach Zusatz von 2 bis 10 Gew.-% Bindemittel, vorzugsweise 3 bis 6 Gew.-% Bindemittel, bezogen auf die Gesamtmenge, zu Briketts geformt werden.

Nach der Hydratisierung des im Staub enthaltenen freien Kalks besteht nicht mehr die Gefahr des vorzeitigen Zerfalls der Reststoffbriketts. Im Gegensatz zu dem aus der DE-AS 23 61 742 bekannten Verfahren, bei dem der Staubanteil mit einer Korngröße unter 100 $\mu$m auf maximal 25 % beschränkt sein soll, kann bei dem erfindungsgemäßen Verfahren ein höherer Staubanteil von 30 bis 70 % in den Briketts verarbeitet werden. Dies ist wegen des verhältnismäßig hohen Mengenanteils an Staub gegenüber den Anteilen von Reststoffen in anderer Form von großer Wichtigkeit. Die erhöhte Menge an zu Briketts verarbeitbarem Staub beruht neben der vorgeschalteten Hydratisierung des freien gebrannten Kalks darauf, daß Metallspäne mit einer bestimmten Länge, die nicht kürzer als 7 und nicht länger als 30 mm betragen soll, eingesetzt werden. Metallspäne mit einer in diesem Bereich liegenden Länge bilden

2

nämlich in idealer Weise ein Gitterwerk, in das sich der mit Bindemittel versetzte Staub einlagert und so der Zusammenhalt des Briketts bei Einsatz geeigneter Bindemittel, wie Bitumen, Wasserglas, Zellpulver (Trockenanteil der Sulfitablauge), ein Melasse-Kalk-Gemisch oder Soda, auch ohne Verwendung von Wasser, das bei bekannten Verfahren neben dem Bindemittel stets vorhanden sein muß, um die Reststoffmischung verarbeitbar zu machen, gewährleistet ist.

Es ist jedoch erfindungsgemäß auch vorgesehen, um den Bindemittelanteil zu reduzieren zusätzliches Wasser in einer Menge von 2 bis 8 Gew.-%, vorzugsweise 3 bis 6 Gew.-% zuzusetzen, wobei es von Vorteil ist, bei der Hydratisierungsbehandlung den Wassergehalt der Mischung einzustellen.

Die Mischung kann bevorzugt auf einer Walzenpresse bei einem Walzendruck von 20 bis 80 kN/cm Walzenbreite, vorzugsweise 30 bis 40 kN/cm Walzenbreite, brikettiert werden. Durch Lagern bei Raumtemperatur über einen Zeitraum von 1 bis 2 Tagen werden die Briketts ausgehärtet.

Als staubförmiger Anteil der Mischung kann bevorzugt der bei der Erzeugung von rostfreiem Stahl anfallende Filterstaub eingesetzt werden.

In Naßfiltern anfallender Schlamm kann ebenfalls verwendet werden, wenn dieser durch Trocknung und Zerkleinerung in trockene Staubform überführt wird.

Als Späne können bevorzugt die beim Schleifen von Vorbrammen, Brammen, Blöcken, Platinen und Blechen aus rostfreiem Stahl anfallenden Schleifspäne eingesetzt werden.

Gegenüber den vorerwähnten bekannten Verfahren hebt sich das erfindungsgemäße dadurch in vorteilhafter Weise ab, daß haltbare Briketts aus den beiden mengenmäßig am stärksten anfallenden Reststoffarten, Staub und Metallspäne, in verhältnismäßig einfacher und kostengünstiger Weise erzeugt werden können.

Anhand der folgenden Beispiele wird das erfindungsgemäße Verfahren näher erläutert. Während die Beispiele 1 und 2 nach dem erfindungsgemäßen Verfahren durchgeführt wurden, wurde für das Beispiel 3 zum Vergleich eine nur aus Staub gepreßte Probe herangezogen.

## Beispiel 1

Elektro-Filterstaub aus der Erzeugung von rostfreiem Stahl wurde in einem Intensivmischer auf 6 % Wasser angefeuchtet und danach über eine Zeitraum von 3 Tagen gemaukt. Während dieser Zeit hydratisierte der in dem Elektro-Filterstaub befindliche gebrannte Kalk zu Calciumhydroxid.

Nach dem Mauken erfolgte ein Vermischen von 70 Teilen Elektro-Filterstaub mit 30 Teilen Spänen mit einer Länge im Bereich von 10 bis 25 mm, die beim Schleifen von Vorbrammen aus rostfreiem Stahl angefallen waren. Die Metallspäne können mit dem Filterstaub auch bereits während der Befeuchtung mit Wasser gemischt werden. Die Mischung wurde auf 6,3 % Feuchtigkeit eingestellt und 5 % Zellpulver (Trockenanteil der Sulfitablauge) als Bindemittel zugegeben.

Danach wurde die Mischung über eine Dosier- und Vorverdichter-Schnecke einer Walzenbrikettierpresse zugeführt. Bei einer Walzenumfangsgeschwindigkeit von 0,33 m/s, einem eingestellten Preßdruck von 28 kN/cm Walzenbreite und Brikettvolumen der Brikettwalzen von 10 cm³ wurden Briketts mit einem Raumgewicht von 3,53 g/cm³ erzeugt.

Die Sturzfestigkeit der erzeugten Briketts betrug nach Pressenaustritt 3,5 m. Nach einer Aushärtung der Briketts an Raumtemperatur von 3 Tagen wurde eine Kaltdruckfestigkeit der Briketts von 115 daN/Brikett gemessen.

## Beispiel 2

In diesem Beispiel wurde das Verhältnis Elektro-Filterstaub zu Schleifspäne auf 50 : 50 eingestellt. Die übrigen Werte können der nachstehenden Tabelle entnommen werden.

Wie die Tabelle zeigt, konnte eine Sturzfestigkeit der Briketts nach dem Pressenaustritt von 4,0 m erreicht werden. Die Kaltdruckfestigkeit der Briketts nach einer Aushärtung von 3 Tagen betrug 175 daN/Brikett.

## Beispiel 3

In diesem nicht der Erfindung entsprechenden Vergleichsbeispiel wurden dem Filterstaub keine Metallspäne zugesetzt. Die übrigen Angaben können der nachstehenden Tabelle entnommen werden.

Die Sturzfestigkeit dieser Briketts betrug nach dem Pressenaustritt nur 0,7 m. Die Kaltdruckfestigkeit nach 3 Tagen Aushärtung belief sich auf 50 daN/Brikett.

Die Ausführungsbeipiele zeigen, daß das erfindungsgemäße Einbinden von Metallspänen mit der Auswirkung als Armierung zu einer ungewöhnlich guten Sturzfestigkeit der frisch erzeugten Briketts und zu einer sehr guten Kaltdruckfestigkeit der ausgehärteten Briketts führt.

(Siehe die Tabelle, Seite 4)

Tabelle

| Verfahrenschritte | Beispiel | | |
|---|---|---|---|
| | 1 | 2 | 3 |
| E-Filterstaub anfeuchten auf (% $H^2O$) | 6 | 6 | 6 |
| Maukzeit (Tage) | 3 | 3 | 3 |
| Mischen ; Verhältnis E-Filterstaub/Späne (Tl./Tl.) | 70/30 | 50/50 | 100/0 |
| Restbefeuchtung der Mischung auf (% $H_2O$) | 6,3 | 5,4 | 7,3 |
| Bindemittel-Zugabe Zellpulver (%) | 5 | 3 | 7 |
| Brikettierung bei Walzenpreßdruck (kN/cm Walzenbreite) | 28 | 26 | 24 |
| Brikettvolumen ($cm^3$) | 11 | 11 | 11 |
| *Qualität der Briketts* | | | |
| a) Sturzfestigkeit nach Pressenaustritt Sturzhöhe (m) | 3,5 | 4,0 | 0,7 |
| b) Kaltdruckfestigkeit nach 3 Tagen Aushärtung (daN/Brikett) | 115 | 175 | 50 |
| Raumgewicht (g/$cm^3$) der Briketts | 3,53 | 3,84 | 2,85 |

## Ansprüche

1. Verfahren zur Rückgewinnung von bei der Erzeugung und Bearbeitung von Stahl in Form von metallhaltigem Staub und Spänen anfallenden Reststoffen, wobei diese Reststoffe unter Zusatz von Bindemittel zu Briketts geformt werden, dadurch gekennzeichnet, daß die bei der Stahlerzeugung und/oder -behandlung angefallenen, in Filtern abgeschiedenen und gesammelten staubförmigen metallhaltigen Reststoffe in trockenem Zustand zur Hydratisierung des im Staub enthaltenen freien gebrannten Kalks (CaO) mit 3 bis 8 Gew.-% Wasser befeuchtet und gemaukt bzw. mit einer entsprechenden Menge Wasserdampf behandelt und nach Abschluß der Hydratisierung mit Metallspänen, deren Länge 7 bis 30 mm beträgt, im Verhältnis 70 : 30 bis 30 : 70 gemischt und der Mischung nach Zusatz von 2 bis 10 Gew.-% Bindemittel, bezogen auf die Gesamtmenge, zu Briketts geformt werden.

2. Verfahren nach Anspruch 1, dadurch gekennzeichnet, daß der Staub mit 4 bis 7 Gew.-% Wasser befeuchtet wird.

3. Verfahren nach Anspruch 1, dadurch gekennzeichnet, daß Metallspäne mit einer Länge von 7 bis 15 mm zugesetzt werden.

4. Verfahren nach einem der Ansprüche 1 bis 3, dadurch gekennzeichnet, daß 3 bis 6 Gew.-% Bindemittel, bezogen auf die Gesamtmenge, zugesetzt wird.

5. Verfahren nach einem der Ansprüche 1 bis 4, dadurch gekennzeichnet, daß die Mischung 2 bis 8 Gew.-%, vorzugsweise 3 bis 6 Gew.-% Wasser enthält.

6. Verfahren nach Anspruch 5, dadurch gekennzeichnet, daß der Gesamtwassergehalt der Mischung bei der Hydratisierungsbehandlung eingestellt wird.

7. Verfahren nach einem der Ansprüche 1 bis 6, dadurch gekennzeichnet, daß die Mischung auf einer Walzenpresse bei einem Walzendruck von 20 bis 80 kN/cm Walzenbreite, vorzugsweise 30 bis 40 kN/cm Walzenbreite, brikettiert wird und die Briketts durch Lagern bei Raumtemperatur über einen Zeitraum von 1 bis 2 Tagen ausgehärtet werden.

8. Verfahren nach einem der Ansprüche 1 bis 7, dadurch gekennzeichnet, daß als staubförmiger Anteil der Mischung der bei der Erzeugung von rostfreiem Stahl anfallende Filterstaub eingesetzt wird.

9. Verfahren nach einem der Ansprüche 1 bis 8, dadurch gekennzeichnet, daß als Späne die beim Schleifen von Vorbrammen, Brammen, Blöcken, Platinen und Blechen aus rostfreiem Stahl anfallende Schleifspäne eingesetzt werden.

10. Verfahren nach einem der Ansprüche 1 bis 9, dadurch gekennzeichnet, daß als Bindemittel Zellpulver (Trockenanteil der Sulfitablauge), ein Melasse-Kalk-Gemisch, Soda oder Bitumen eingesetzt wird.

**Claims**

1. Process for recovering residual substances which are produced, in the form of metalliferous dust and turnings, during the making and processing of steel, in which process a binder is added to the residual substances which are then moulded into briquettes, characterised in that the pulverulent metalliferous residual substances which have been produced during the making and/or the processing of the steel, and which have been deposited in filters and collected in the dry condition, are moistened and digested with 3 to 8 % by weight of water, or with a corresponding amount of steam, this treatment being in order to hydrate the free burnt lime (CaO) which is contained in the dust, and, after completion of the hydration, the treated residual substances are mixed with metal turnings which are 7 to 30 mm long, in a ratio of 70 : 30 to 30 : 70, and, after adding 2 to 10 % by weight of a binder relative to the total amount, the mixture is moulded into briquettes.

2. Process according to Claim 1, characterised in that the dust is moistened with 4 to 7 %, by weight, of water.

3. Process according to Claim 1, characterised in that metal turnings having a length of 7 to 15 mm are added.

4. Process according to one of Claims 1 to 3, characterised in that 3 to 6 %, by weight, of binder are added, referred to the total amount.

5. Process according to one of Claims 1 to 4, characterised in that the mixture contains 2 to 8 %, by weight, preferably 3 to 6 %, by weight, of water.

6. Process according to Claim 5, characterised in that the total water content of the mixture is established during the hydration treatment.

7. Process according to one of Claims 1 to 6, characterised in that the mixture is briquetted on a roller press, at a roller-pressure of 20 to 80 kN per cm of roller-width, preferably 30 to 40 kN per cm of roller-width, and the briquettes are cure-hardened by storing at room temperature for a period of 1 to 2 days.

8. Process according to one of Claims 1 to 7, characterised in that the filter-dust which is produced during the making of stainless steel is employed as the pulverulent fraction of the mixture.

9. Process according to one of Claims 1 to 8, characterised in that the grinding swarf produced during the grinding of roughed slabs of stainless steel, stainless steel slabs, ingots, sheet bars, and plates, is employed as the turnings.

10. Process according to one of Claims 1 to 9, characterised in that cellulose powder (dry-solid fraction of waste sulphite liquor), a molasses/lime mixture, soda, or bitumen is employed as the binder.

**Revendications**

1. Procédé de récupération de déchets produits lors de la production et du traitement d'acier sous forme de poudre et d'ébarbures contenant du métal, ces déchets étant mis sous forme d'aggloméré par addition de liant, caractérisé par le fait que les déchets sous forme de poudre qui sont produits lors de la fabrication et/ou du traitement de l'acier, qui sont séparés dans des filtres et rassemblés, sont humidifiés et mélangés à l'état sec pour l'hydratation de la chaux (CaO) libre calcinée contenue dans la poudre avec 3 à 8 % en poids d'eau ou traités avec une quantité correspondante de vapeur d'eau et, après achèvement de l'hydratation, sont mélangés à des ébarbures métalliques dont la longueur est comprise entre 7 et 30 mm, en proportion comprise entre 70 à 30 et 30 à 70, et le mélange, après addition de 2 à 10 % en poids de liant, par rapport à la masse totale, est mis sous forme d'aggloméré.

2. Procédé selon la revendication 1, caractérisé par le fait que la poudre est humidifiée par 4 à 7 % en poids d'eau.

3. Procédé selon la revendication 1, caractérisé par le fait qu'on ajoute les ébarbures métalliques ayant une longueur comprise entre 7 et 15 mm.

4. Procédé selon l'une des revendications 1 à 3, caractérisé par le fait qu'on ajoute 3 à 6 % en poids, par rapport à la masse totale, de liant.

5. Procédé selon l'une des revendications 1 à 4, caractérisé par le fait que le mélange contient de 2 à 8 % en poids, de préférence de 3 à 6 % en poids, d'eau.

6. Procédé selon la revendication 5, caractérisé par le fait que la teneur totale en eau du mélange est ajustée lors du traitement d'hydratation.

7. Procédé selon l'une des revendications 1 à 6, caractérisé par le fait que le mélange est aggloméré sur une presse à rouleau avec une pression de rouleau de 20 à 80 kN/cm de largeur de rouleau, de préférence de 30 à 40 kN/cm de largeur de rouleau et les agglomérés sont durcis par stockage à la température ambiante pendant une durée de 1 à 2 jours.

8. Procédé selon l'une des revendications 1 à 7, caractérisé par le fait qu'on introduit, comme composant poudreux du mélange, la poudre de filtration résultant de la fabrication d'acier inoxydable.

9. Procédé selon l'une des revendications 1 à 8, caractérisé par le fait qu'on introduit pour les ébarbures, des ébarbures de rectification de lingots, de brames, de saumons, de largets et de tôles d'acier inoxydable.

10. Procédé selon l'une des revendications 1 à 9, caractérisé par le fait qu'on introduit, comme liant, de la poudre cellulaire (portion sèche de lessive de sulfite résiduaire), un mélange mélasse-chaux, de la soude ou du bitume.